(19)

Europäisches
Patentamt
European
Patent Office
Office européen
des brevets

(11) **EP 2 397 869 A1**

(12) **EUROPEAN PATENT APPLICATION**

(43) Date of publication:
**21.12.2011 Bulletin 2011/51**

(51) Int Cl.:
**G01S 19/14** (2010.01)     **G01S 19/35** (2010.01)

(21) Application number: **11169493.1**

(22) Date of filing: **10.06.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **18.06.2010 JP 2010139650** | (71) Applicant: **Sony Corporation**<br>**Tokyo 108-0075 (JP)**<br><br>(72) Inventor: **Nitta, Manabu**<br>**Tokyo 108-0075 (JP)**<br><br>(74) Representative: **Haines, Miles John L.S.**<br>**D Young & Co LLP**<br>**120 Holborn**<br>**London EC1N 2DY (GB)** |

(54) **Image pickup apparatus, image pickup method, and program**

(57)     An information processing apparatus that receives a plurality of signals from a plurality of Global Positioning System (GPS) satellites, obtains range data from the plurality of signals, acquires image data while obtaining the range data, appends the range data to the image data, and stores the image data appended with the range data in a memory.

FIG.1

EP 2 397 869 A1

**Description**

**BACKGROUND OF THE DISCLOSURE**

The present invention relates to an image pickup apparatus, an image pickup method, and a program, and in particular to an image pickup apparatus that uses a GPS receiver.

GPS (Global Positioning System) is a position measuring system that was developed in order to calculate the global position and movement speed of moving bodies such as vehicles, aircraft, and ships in real time using GPS satellites stationed in orbit. In recent years, aside from calculating the position of a moving body, GPS has come into widespread use in other fields such as the static measurement of distances and directions between points on the globe. When using such a GPS system, a GPS receiver is used to receive electromagnetic waves emitted from GPS satellites (see, for example, Japanese Patent No. 4,292,682).

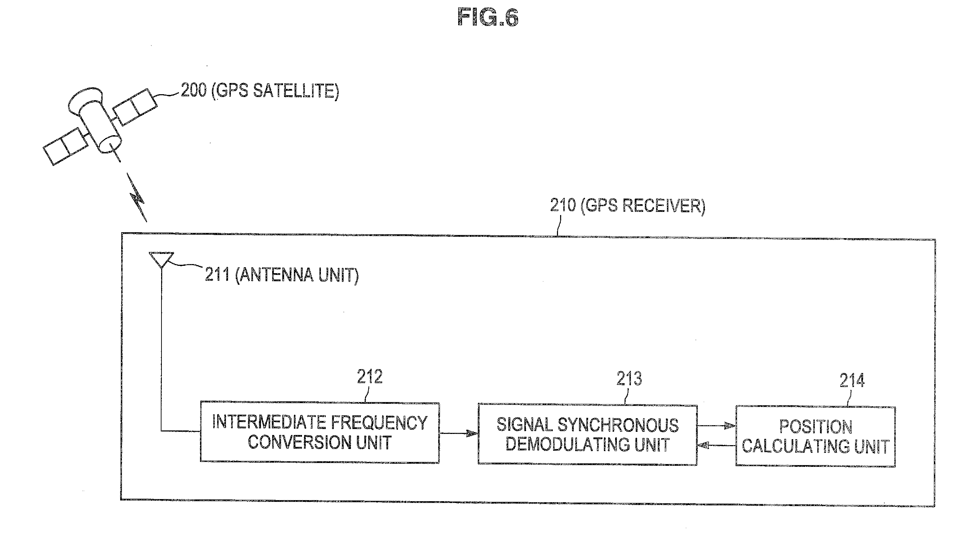

FIG. 6 is a diagram showing the overall configuration of a GPS system in typical use. As shown in FIG. 6, spread-spectrum signals of 1.57542GHz are emitted from GPS satellites 200. The emitted signals are received by an antenna unit 211 of a GPS receiver 210 after a propagation time in keeping with the distances travelled by the signals. The signals received by the antenna unit 211 are down-converted to a specified intermediate frequency by an intermediate frequency conversion unit 212 and are inputted into a signal synchronous demodulating unit 213. After this, the signals are subjected to despreading by the signal synchronous demodulating unit 213 to demodulates data. The demodulates data is used in a position calculating unit 214 to calculate a position. By doing so, the signals emitted from the GPS satellites 200 are received by the GPS receiver 210 and a position is calculated.

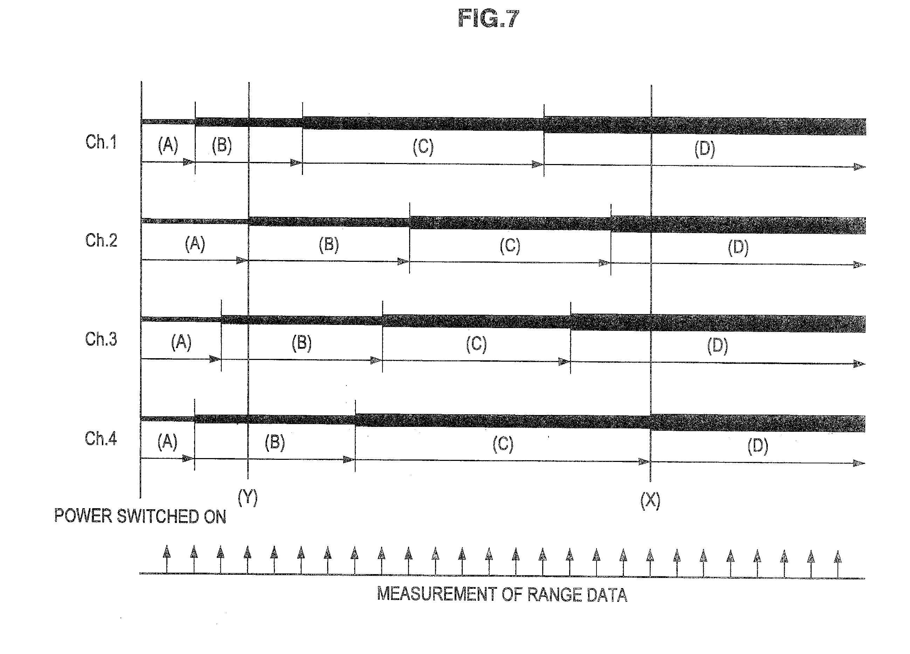

FIG. 7 shows a conventional GPS positioning operation carried out by the GPS receiver 210. In FIG. 7, the horizontal axis represents time measured from power-on (i.e., start-up) of the GPS receiver 210. First, when the power is switched on, signals are received from a plurality of GPS satellites that are picked up at such time and a separate channel is assigned to each GPS satellite (in the example in FIG. 7, the assigned channels are denoted as "Ch.1" to "Ch. 4"). After this, data from the respective GPS is demodulated on the respective channels. In more detail, as in FIG. 7, spectrum dispreading data demodulation are carried out by the signal synchronous demodulating unit 213 (labeled as "A"), and then subframe synchronization (labeled as "B") to the preamble, and acquisition of parameters from sub-frames (labeled as "C") are successively carried out by the position calculating unit 214. Although the calculation of a position (labeled as "D") becomes possible on the respective channels when the acquisition of the orbital parameters (labeled as "C") on such channels has been completed, the position calculating unit 214 will normally start to calculate a position when the acquisition of orbital parameters (labeled as "C") has been completed on four or more channels (i.e., at the point labeled "X" in FIG. 7). When the calculation of a position has ended, position data is outputted and the present position is then finally outputted.

With the conventional GPS receiver and GPS positioning method described above, around thirty seconds is required from start-up of the apparatus until positioning is possible. This is because around five seconds are required by the spectrum despreading and data modulation labeled as "A", around ten seconds are required by the subframe synchronization labeled as "B", and, due to the relationship with the arrangement of frames in the data, around twenty seconds are required by the acquisition of the orbital parameters labeled as "C".

For this reason, devices that store the orbital parameters obtained at the previous power-on in a nonvolatile memory and start to calculate a position using stored orbital parameters when data demodulation (labeled as "A") (□detection of synchronization timing) have been conventionally developed. However, with such configuration, since a validity period provided in the system expires after a certain time has passed (for example, around two hours), it will not be possible to use the stored orbital parameters if the device has been stopped for a long period. When this happens, in the same way as before, it is not possible on starting up the GPS receiver to carry out positioning until new orbital parameters have been acquired, which means that it takes a long time for the calculation of a position to begin.

Recently, a variety of mobile terminals such as digital cameras have incorporated or connected to GPS receivers to make use of position data. As one example, a GPS receiver is provided in a digital camera picked up images are recorded with embedded data on the image pickup position the like. For this type of terminal, since it is not possible to measure the present immediately after start-up, it is not possible to embed data on an image pickup position in images picked up immediately after start-up, with it being necessary to wait until positioning becomes possible. This is extremely inconvenient.

That is, since it fundamental takes around thirty seconds for the GPS receiver to acquire orbital parameters, a wait time of at least thirty seconds is produced from power-on for a digital camera, for example, until photos can be taken, which is extremely inconvenient. To solve this problem, it could be conceivably possible to turn on the power of the GPS receiver in advance, but in such case, there is the problem that the power of the GPS receiver would have to be kept on constantly, resulting in the problem of high power consumption.

In order to calculate a position when there is already a high processing load, such as during image pickup by a digital camera, consumes large amounts of hardware and software resources and also power.

To reduce this resourcing requirement, it could be considered to append the GPS reception data itself received by the GPS receiver to the picked-up images and to carry out calculation of the position and the like at a later time. However, the GPS reception data would then need to be appended to each picked up image which would add significant data storage requirement, e.g. 140 KB, which would be undesirable. Moreover, if the GPS reception data itself received by a GPS receiver were appended to the picked-up images, since reception data would be appended to picked-up images in the same way even in an environment, such as indoors, where the GPS receiver is incapable of receiving GPS reception data, the data appended to picked-up images would in some cases be meaningless.

## SUMMARY OF THE INVENTION

The present invention provides an image pickup apparatus, image pickup method, and program that are capable of reducing the amount of data for calculating a position to images without increasing the required and software resources.

According to one embodiment, the present invention is directed to an information processing apparatus, comprising: a receiver configured to receive a plurality of signals from a plurality of Global Positioning System (GPS) satellites, and obtain range data from the plurality of signals; an image acquiring unit configured to acquire image data while the receiver is obtaining the range data; and an image processing unit configured to append the range data to the image data and store the image data appended with the range data in a memory.

The receiver may be configured to obtain the range data by counting chips in pseudo-random noise of each of the plurality of signals.

The information processing apparatus may also include a position calculating unit configured to extract orbital parameters from each of the plurality of signals.

The position calculating unit may be configured to extract the orbital parameters after the image acquiring unit has acquired the image data.

The position calculating unit may be configured to output the orbital parameters to the image processing unit.

The image processing unit may be configured to append the orbital parameters to the image data appended with the range data in the memory.

The position calculating unit may be configured to acquire the range data and the orbital parameters appended to the image data.

The position calculating unit may be configured to calculate a position based on the acquired range data and the orbital parameters.

The position calculating unit may be configured to output the calculated position to the image processing unit.

Image unit may be configured to the position information received from the position calculating unit to the image in place of the range and the orbital parameters, and store the image data appended with the position in the memory.

According to another embodiment, the invention is directed to an information processing method, comprising: receiving a plurality of signals from a plurality of Global Positioning System (GPS) satellites; obtaining range data from the plurality of signals; acquiring image data while obtaining the range data; appending the range data to the image data; and storing the image data appended with the range data in a memory.

Obtaining the range data may include counting chips in pseudo-random noise of each of the plurality of signals.

The information processing method may further include extracting orbital parameters from each of the plurality of signals after the image data has been acquired.

The information processing method may further include appending the orbital parameters to the image data appended with the range data in the memory.

The information processing method may further include acquiring the range data and the orbital parameters appended to the image data.

The information processing method may further include calculating a position based on the acquired range data and the orbital parameters.

The information processing method may further include appending the position information to the image data in place of the range data and the orbital parameters; and storing the image data appended with the position information in the memory.

According to another embodiment, the invention is directed to a non-transitory computer-readable medium including computer program instructions, which when executed by an information processing apparatus, cause the information processing apparatus to perform a method comprising: receiving a plurality of signals from a plurality of Global Positioning System (GPS) satellites; obtaining range data from the plurality of signals; acquiring image data while obtaining the range data; appending the range data to the image data; and storing the image data appended with the range data in a memory.

According another embodiment, the invention is directed an information processing apparatus comprising: means for receiving a plurality of signals from a plurality of Global Positioning System (GPS) satellites; means for obtaining range data the plurality of signals; means for acquiring image data while the means obtaining range data is obtaining range data; means for appending the range data to the image data; and means for storing the image data appended with the range data.

FIG. 1 is a block diagram schematically showing the configuration of an image pickup apparatus according to an embodiment of the present invention;

FIG. 2 is a diagram useful in explaining the detailed configuration of a demodulation unit of a GPS block shown in FIG. 1;

FIG. 3 is a diagram useful in explaining a frame structure of a hierarchical signal (navigation message) send from each GPS satellite;

FIG. 4 is a sequence chart of an image pickup process according to an embodiment of the present invention;

FIG. 5 is a diagram useful in explaining GPS reception data, intermediate data, and position data;

FIG. 6 is a diagram useful in explaining the overall configuration of a GPS system in typical use; and

FIG. 7 is a diagram useful in explaining a GPS positioning operation carried out by a GPS receiver.

Hereinafter, embodiments of the present invention will be described in detail with reference to the appended drawings. Note that, in this specification and the appended drawings, structural elements that have substantially the same function and structure are denoted with the same reference numerals, and repeated explanation of these structural elements is omitted.

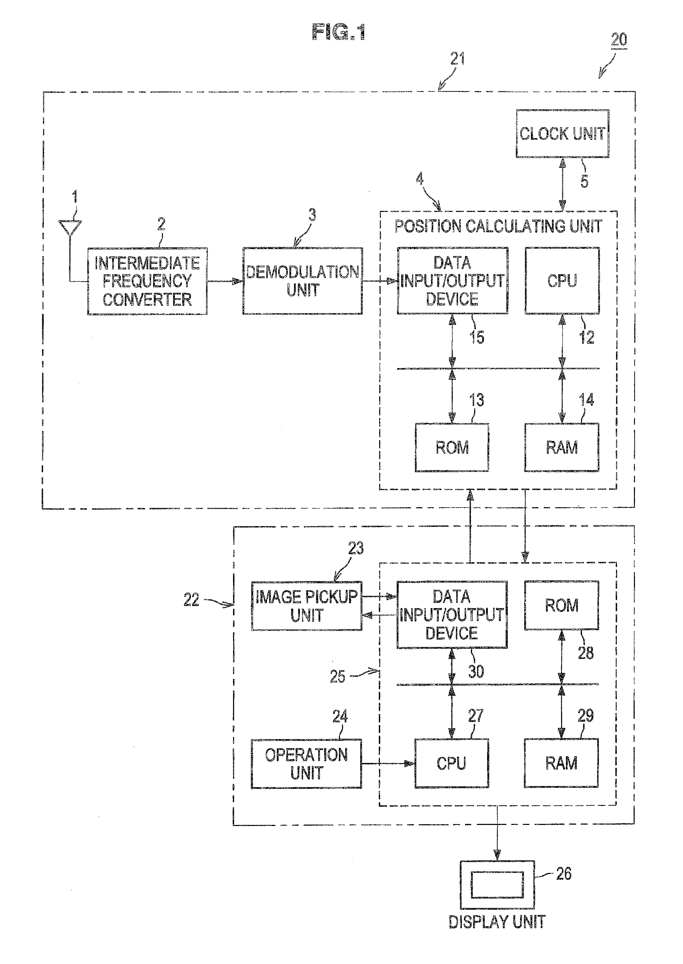

First, an image pickup apparatus according to an embodiment of the present invention will be described. FIG. 1 is a block diagram schematically showing the configuration of an image pickup apparatus according to an embodiment of the present invention.

In FIG. 1, an image pickup apparatus 20, such as a digital camera, includes a GPS block 21 and an image pickup block 22.

The GPS block 21 includes a GPS antenna unit 1 that receives 1575,42MHz signals (electromagnetic waves) emitted from GPS satellites at a high altitude of around 20,000km or higher, an intermediate frequency converter 2 for converting the received signals from the GPS antenna unit 1 to intermediate frequencies, a demodulation unit 3 that demodulated signals that have been lowered to an intermediate frequency by the intermediate frequency converter 2, a position calculating unit 4 for extracting necessary data from the demodulated signals and calculating the present position, and a clock unit 5 composed of a microcomputer or the like with an incorporated clock function for knowing the time on the GPS block 21 side. The GPS antenna unit 1 is one example of a "reception unit". The demodulation unit 3 is one example of a "range data acquisition unit" and "orbital parameter acquisition unit". The position calculating unit 4 is one example of a "position data calculating unit".

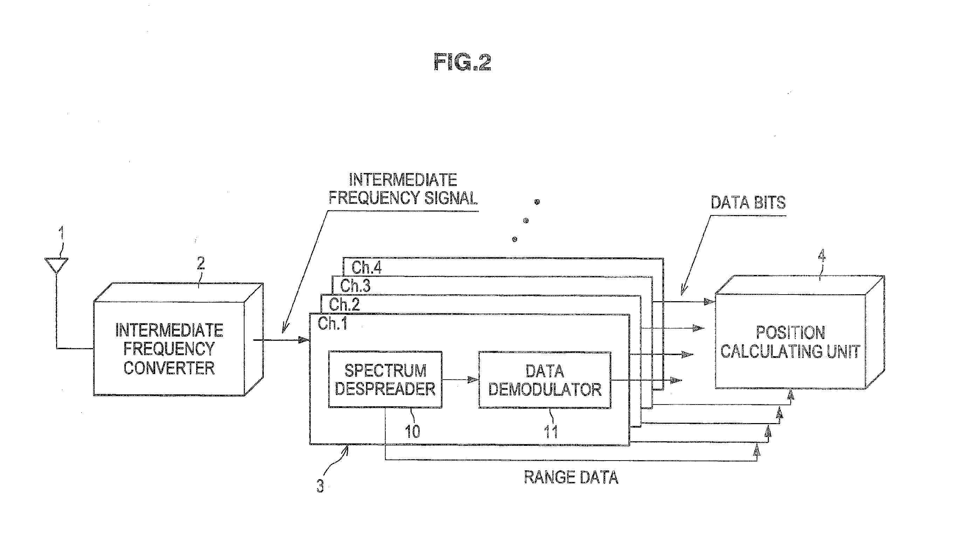

FIG. 2 is a diagram useful in explaining the detailed configuration of the demodulation unit 3 of the GPS block 21 in FIG. 1.

As shown in FIG. 2, the demodulation unit 3 includes the spectrum despreader 10 and the data demodulator 11, with such components having a plurality of channels and carrying out specified processing that assigns a separate channel to each satellite for the signals sent from a plurality of GPS satellites.

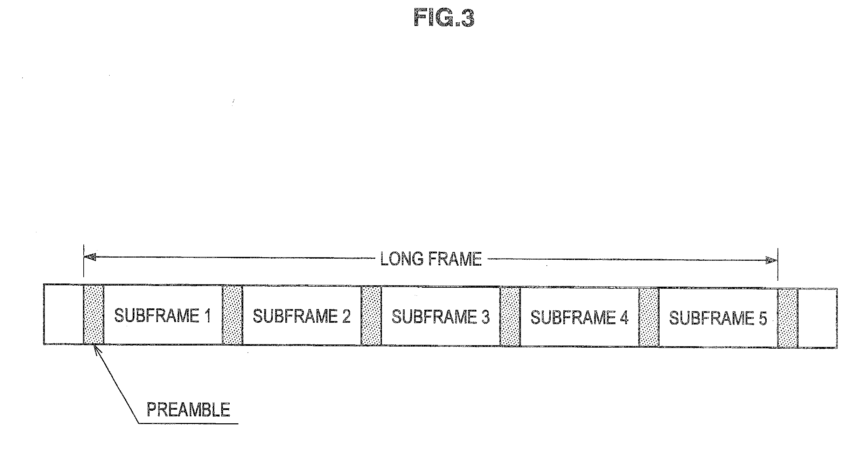

FIG. 3 is a diagram useful in explaining the frame structure of a hierarchical signal (navigation message) sent from each GPS satellite.

As shown in FIG. 3, a long frame is composed of five sub-frames. One subframe is composed of ten words, one word is composed of thirty data bits, and one data bit is composed of twenty pseudo noise codes (C/A codes). Since one pseudo noise code is 1ms long, one data bit is 20ms long, one word is 600ms long, one subframe is 6s long, and one long frame is 30s long. Furthermore, twenty-five long frames construct one master frame, with transmission continuing from a GPS satellite with 12.5 minutes as one cycle.

Each subframe starts with an eight-bit preamble (synchronization pattern). A TOW (Time Of Week) expressing a signal time up to one week in six-second cycles is stored from the thirty-first bit to the seventeenth bit that form the second word in each subframe. Using the TOW, it is possible to know a count value of each subframe. Three bits from the fiftieth bit of each subframe show a subframe ID. From the count values and IDs of the subframes, it is possible to know the transmission time of a signal at a GPS satellite. In addition, orbital parameters (ephemeris data) that is detailed orbital information of a GPS satellite is stored in the first to third subframes, and information relating to every GPS satellite is included in the fourth to fifth subframes, with almanac data that is approximate orbital information and is mainly used when searching for GPS satellites also being included in here.

A signal of the structure described above has a bitrate of 50bps and a bit period of 20ms. The signal described above is transmitted from a GPS satellite with a spread spectrum using pseudo-random noise with a chip speed of 1.023MHz. The code length (iteration period) of the pseudo-random noise is 1ms, with twenty of such periods corresponding to one bit in the signal. Note that one chip period is around 1 $\mu$sec.

Through correlation detection carried out by dispreading where the pseudo-random noise that is unique to each GPS satellite is multiplied together, the spectrum despreader 10 demodulates only the signals of the assigned GPS satellites that are buried under the noise. Here, the signals that have been multiplied by pseudo-random noise and emitted from the respective GPS satellites are emitted with uniform timing at every GPS satellite, with such signals being repeated with a certain period. In the spectrum despreader 10, range data is obtained by counting chips in the pseudo-random noise in the signal. As a configuration for doing so, a 1.023MHz clock that is synchronized with the chip speed of the pseudo-random noise is outputted from a pseudo-random noise controller, not shown, that constructs the spectrum despreader 10. This clock is supplied as a count clock to a range counter (not shown) that constructs the spectrum despreader 10. An epoch signal that is synchronized with an iteration cycle of the pseudo-random noise is outputted from the pseudo-random noise generator and the epoch signal is supplied as a reset signal to the range counter. In the range counter, chips in the pseudo-random noise are simultaneously counted on every channel for a specified period, for example, 100ms, and the resulting count values are outputted to the position calculating unit 4 as the range data. The range data described above can be obtained once a spread-spectrum signal transmitted from a GPS satellite has been received by a GPS receiver and spectrum dispreading of such signal by the spectrum despreader 10 has been commenced. As one example, this spectrum despreader 10 can favourably use the technology disclosed in Japanese Laid-Open Patent Publication No. H04-237228.

That is, the pseudo-random noise, a 1.023MHz clock signal that is synchronized with a chip speed of the pseudo-random noise, and a reset signal that is synchronized with an iteration cycle of the pseudo-random noise are outputted from the pseudo-random noise controller. In the spectrum despreader 10, the clock signal and the reset signal outputted from the pseudo-random noise controller are used to count the pseudo-random noise from a GPS signal. A count value is outputted every specified period, for example, 100ms as the range data.

The data demodulator 11 demodulates the signal subjected to dispreading by the spectrum despreader 10 using a two-phase demodulation circuit and outputs the result as data with the data frame structure described above to the position calculating unit 4.

As shown in FIG. 1, the position calculating unit 4 includes a CPU 12, a ROM 13 in which a specified program is stored, a RAM 14 that stores and reads out data, and a data input/output device 15 that inputs and outputs data to and from the RAM 14. Here, an orbital parameter storing unit that stores orbital parameters in advance for enabling positioning to start in the same way as normal but at an earlier timing after start-up is provided in the RAM 14, which is also provided with a range data storage unit that stores range data. The CPU 12 executes specified processing based on the program stored in the ROM 13, which enables the position calculating unit 4 to calculate a position and output position data.

As shown in FIG. 1, the image pickup block 22 includes an image pickup unit 23 for picking up an image of a subject, an operation unit 24 for operating the image pickup unit 23, and an image processing unit 25, as well as a display unit 26 such as a monitor. The image pickup unit 23 is one example of an "image pickup unit". The operation unit 24 is one example of an "operation unit". Here, the image processing unit 25 includes a CPU 27, a ROM 28 in which a specified program is stored, a RAM 29 that stores and reads out data, and a data input/output device 30 that inputs and outputs data to and from the RAM 29. The CPU 27 is one example, of an "image pickup control unit" and a "storage control unit". The CPU 27 controls image pickup by the image pickup unit 23 in accordance with an image pickup operation received by the operation unit 24. The RAM 29 is one example of a "storage unit" and includes an image data storing unit storing image data picked up by the image pickup unit 23, a time data storage unit storing time data for when a predetermined operation of the operation unit 24 was made, and a position data storage unit storing position data generated by positioning by the GPS block 21.

In the image pickup apparatus 20, when a specified operation (for example, an image pickup operation) has been carried out for the operation unit 24, data on an image picked up by the image pickup unit 23 is stored in the image data storage unit of the RAM 29 and, together with this, a time of operation of the operation unit 24, that is, data on the image pickup time, is stored in the time data storage unit of the RAM 29. In addition, when a specified operation (for example, an image pickup operation) has been carried out for the operation unit 24, in the GPS block 21, the range data at that time is obtained and stored in the range data storage unit of the RAM 14. After this, in the GPS block 21, when the orbital parameter have acquired, such orbital parameters are stored in an orbital parameter unit of the RAM 14. Later, at timing when there is less on the hardware/software or the image apparatus, 20, the position calculating unit 4 of the GPS block 21 calculates a position and outputs position data to the pickup block 22, with such position data then being in the position data storage unit of the RAM 29. When the picked up image data is displayed on the display unit 26, the image data and the time data and position data corresponding to the image data are fetched and are displayed together. Alternatively the time data and position data may be processed so as to be capable of being displayed as file information of the image data.

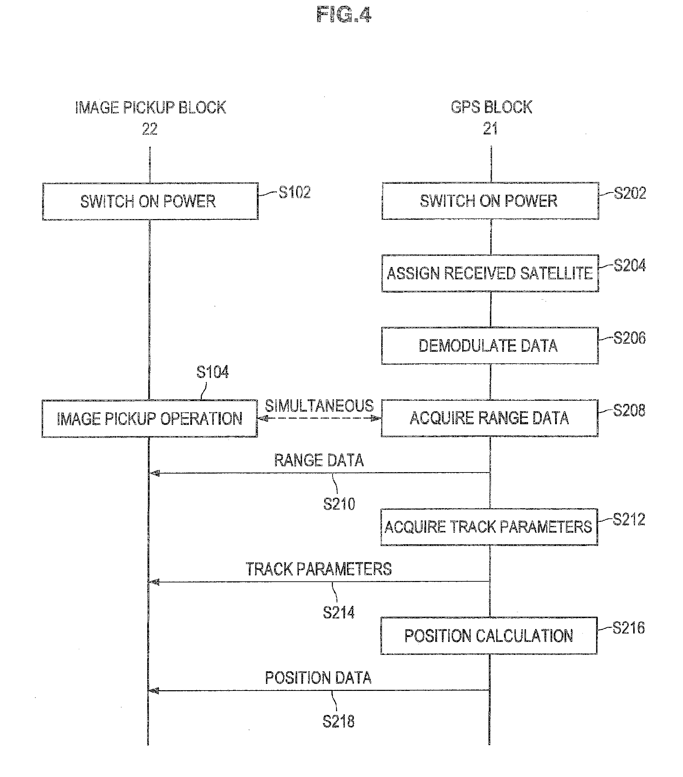

Next, an image pickup process according to an embodiment of the present invention will be described. FIG. 4 is a sequence chart of an image pickup process according to the present embodiment.

In FIG. 4, first, by turning on the power of the image pickup apparatus 20, power is turned on for the image pickup block 22 and the GPS block 21 (steps S102, S202).

Next, in the GPS block 21, signals emitted from GPS satellites are received by the GPS antenna unit 1 after a propagation time in keeping with the respective distances travelled by such signals. The signals received by the GPS antenna unit 1 are down-converted to intermediate frequencies by the intermediate frequency converter 2 and inputted into the demodulation unit 3. After this, in the demodulation unit 3, signals from respective satellites out of the plurality of GPS satellites that can be picked up at that time are received and a separate channel is assigned to each of the GPS satellites (step S204).

Next, in the GPS block 21, demodulation of data from the GPS satellites assigned to the channels is commenced on the respective channels (step S206), and once the despreading of signals by the spectrum despreader 10 commences, chips of pseudo-random noise included in the signals are outputted in cycles of a predetermined period, for example, 100ms.

After this, when the user carries out an image pickup operation via the operation unit 24 in the image pickup block 22 (step S104), at the same time as such image pickup operation, in the GPS block 21, the demodulation unit 3 outputs count values that result from the counting above to the position calculating unit 4 as range data. The position calculating unit 4 acquires the outputted range data (step S208) and outputs the acquired range data to the image pickup block 22 (step S210). The position calculating unit 4 also stores the acquired range data via the data input/output device 15 in the range data storage unit of the RAM 14. Note that if it is not in sleep S208 to acquire the range data within a certain time, the GPS block 21 may determine that the position of the image pickup apparatus 20 is an undetectable position for GPS and suspend the acquisition of range data and orbital parameters.

In the image pickup block 22, in accordance with the image pickup operation in step S104, the range data outputted in step S210 is appended to the data of the image picked up by the image pickup unit 23 and the resulting image data is stored in the image data storage unit of the RAM 29.

Next, in the GPS block 21, on each channel, when the first to third subframes of each main frame of the obtained data have been obtained, the position calculating unit 4 extracts the orbital parameters stored in such subframes (step S212). After this, the position calculating unit 4 outputs the extracted orbital parameters to the image pickup block 22 (step S214). The position calculating unit 4 may also store the extracted orbital parameters in the orbital parameter storage unit of the RAM 14. Note that when the orbital parameters have been acquired in advance, the position calculating unit 4 may output such orbital parameters acquired in advance to the image pickup block 22. In such case, it is not necessary for the position calculating unit 4 to newly acquire the orbital parameters. Also, the position calculating unit 4 may acquire the orbital parameters from another GPS receiver.

Next, in the image pickup block 22, the orbital parameters outputted in step S214 are also appended to the data of the image picked up by the image pickup unit 23 and the resulting image data is stored in the image data storage unit of the RAM 29.

Next, in the GPS block 21, after the acquisition of the orbital parameters has been completed for every channel, at timing where there is less load on the hardware/software resources of the image pickup apparatus 20, the position calculating unit 4 acquires the range data and the orbital parameters appended to the data on the image stored in the image data storage unit of the RAM 29 from the image pickup block 22, calculates a position based on the acquired range and parameters (step and outputs position data to the image pickup block 22 (step S218). Here, the position calculating unit 4 may calculate a position based on the parameters stored in orbital parameter storage unit of the RAM 14 and the range data in the range data unit of the RAM 14.

in the image pickup block 22, the position data outputted in step S218 is appended to the data of the image picked up by the image pickup unit 23 in place of the range data and the orbital parameters and the resulting image data is stored in the image data storage unit of the RAM 29, thereby completing the present process.

Note that in step S216, as described below, position data on the location where the image pickup operation was carried out is outputted.

First, once the acquisition of orbital parameters has been completed, in the same way as in the conventional art, simultaneous equations for at least four GPS satellites are solved based on the orbital parameters and the range data captured at that time to obtain present position data for such time. That is, the following relationship is established between the distance between the position $(x_s, y_s, z_s)$ of a GPS satellite and the position $(x_u, y_u, z_u)$ of a GPS receiver and the arrival delay time for a signal from such GPS satellite.

$$\left[(x_s-x_u)^2+(y_s-y_u)^2+(z_s-z_u)^2\right]^{1/2}=c\cdot(t^u-t^s)$$

Here, $t_s$ is the time (="range data") when a signal was emitted from a GPS satellite, $t_u$ is the time of reception at the GPS receiver, and c is the speed of light. If the unknowns are expressed as $(x_u, y_u, z_u)$ and $t_u$, by solving the simultaneous quadratic equations with four unknowns given below for four GPS satellites, the present position data is found.

$$[(x_1\text{-}x_u)^2+(y_1\text{-}y_u)^2+(z_1\text{-}z_u)^2]^{1/2}=c\cdot(t_u\text{-}t_1)$$

$$[(x_2\text{-}x_u)^2+(y_2\text{-}y_u)^2+(z_2\text{-}z_u)^2]^{1/2}=c\cdot(t_u\text{-}t_2)$$

$$[(x_3\text{-}x_u)^2+(y_3\text{-}y_u)^2+(z_3\text{-}z_u)^2]^{1/2}=c\cdot(t_u\text{-}t_3)$$

$$[(x_4\text{-}x_u)^2+(y_4\text{-}y_u)^2+(z_4\text{-}z_u)^2]^{1/2}=c\cdot(t_u\text{-}t_4)$$

To obtain position data for a time the power on (i.e., start-up) of the GPS block 21 and the subsequent completion of acquisition of the orbital parameters (i.e., for a time before the acquisition of the orbital parameters has been completed), position data is found using range data acquired at the same time as an image pickup and orbital parameters obtained at a later time. Here, since the orbital parameters include parameters that show a movement path of a GPS satellite and are expressed as a function that uses time as a variable, from such function and the stored range data, it is possible to calculate an approximation of past position data. Note that the function showing the movement path of a GPS satellite is updated every two hours or so, for example. Accordingly, it is possible to use sufficient approximation data for range data (i.e., stored range data) obtained during a period of thirty seconds or so from start-up of the GPS block 21 until acquisition of the orbital parameters. By doing so, after the acquisition of the orbital parameters has been completed, it is possible to obtain position data for any time after the GPS block 21 was started up but before the acquisition of the orbital parameters was completed. Here, although the expression "measurement of range data" is given in FIG. 7, this shows the count (measurement) timing of range data in the demodulation unit 3 described above. In the present embodiment, it is possible to acquire the range data after a point (labeled "Y" in FIG. 7) where spectrum despreading and data demodulation (labeled as "A") have been carried out for every satellite that can be picked up. After the acquisition of the orbital parameters has been completed (i.e., after the point labeled "X" in FIG. 7), it is possible to obtain position data for any point before such time (i.e., for any of the measurement timing of range data between Y and X in FIG. 7).

Although conventional image pickup apparatuses are not able to embed position data in image data unless such apparatuses first wait for around thirty seconds following start-up for positioning to become possible, the present image pickup apparatus 20 is able to obtain position data for points in time after start-up but before the orbital parameters have been acquired. To do so, when an image pickup operation is carried out by the operation unit 24 after start-up of the image pickup apparatus 20 but before acquisition of the orbital parameters, the range data at such point in time is acquired. Subsequently, at any point following the acquisition of the orbital parameters when there is less load on the hardware/software or the image apparatus, 20, in step S216 (see FIG. 4) of the positioning program carried out by the GPS block 21, it is possible to obtain position data for a time before the orbital parameters were acquired, which means that such position data may be appended to image data. By doing so, it becomes possible, even for images picked up immediately after start-up of a digital camera, to acquire and embed position data for when such images were picked up at any time after the orbital parameters have been obtained.

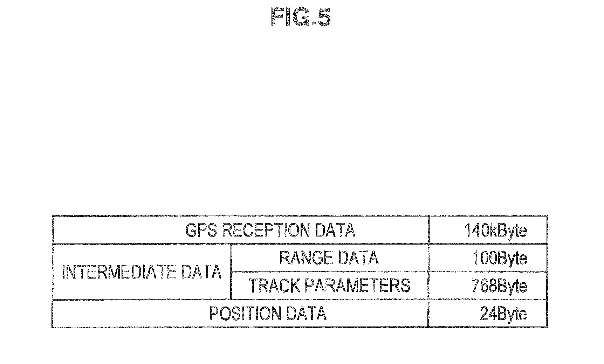

According to the present embodiment, range data acquired by the position calculating unit 4 is appended to data on an image picked up by the image pickup unit 23. By doing so, it is possible after acquisition of the orbital parameters by the position calculating unit 4 to calculate a position using the range data appended to the data of an image and the orbital parameters acquired by the position calculating unit 4 at timing when there is less load on the hardware/software resources of the image pickup apparatus 20. As shown in FIG. 5, since the range data has a sufficiently small data size compared to the size of the GPS reception data itself received by the GPS block 21, compared to when the GPS reception data itself is appended to the data of an image, it is possible to reduce the amount of data for position calculation that is appended to the data of an image.

According to the present embodiment, orbital parameters acquired by the position calculating unit 4 are also appended to the data of an image picked up by the image pickup unit 23. By doing so, it is possible at timing when there is less load on the hardware/software resources of the image pickup apparatus 20 to calculate a position using the range data and orbital parameters appended to the data of the image. As shown in FIG. 5, since the orbital parameters have a sufficiently small data size compared to the size of the GPS reception data itself received by the GPS block 21, compared to when the GPS reception data itself is appended to the data of an image, it is possible to reduce the amount of data for position calculation that is appended to the data of an image.

Also, according to the present embodiment, calculation of a position using the range data appended to the of an image and orbital parameters acquired by the position calculating unit 4 is carried out at timing when there is less load on the hardware/software resources of the image pickup apparatus 20, that is, at different timing to image pickup by the image pickup unit 23. By doing so, processing such as calculation of a position is not carried out when there is a high load, such as during image pickup, thereby avoiding any increase in the required hardware/software resources.

Also, according to the present embodiment, the position data calculated by the position calculating unit 4 is appended to the data of the image picked up by the image pickup unit 23 in place of the range data and the orbital parameters. As shown in FIG. 5, since the position data has a sufficiently small data size compared to the size of the GPS reception data itself received by the GPS block 21 or intermediate data, compared to when the GPS reception data itself or intermediate data is appended to the data of an image, it is possible to reduce the amount of position-related data that is appended to the data of an image.

Also, according to the present embodiment, when the power of the image pickup apparatus 20 has been turned off before orbital parameters are acquired by the demodulation unit 3 following the timing of image pickup by the image pickup unit 23, the power of the various components related to the demodulation unit 3, that is the power of the GPS block 21, may be kept on until the acquisition of orbital parameters by the demodulation unit 3 has been completed. By doing so, it is possible to reliably complete the acquisition of the orbital parameters by the demodulation unit 3.

In the present embodiment, since it is not possible for the demodulation unit 3 to acquire the range data at the same timing as image pickup by the image pickup unit 23 in a case where an image pickup operation has been carried out by the user before the demodulation of data from GPS satellites commences in step S206, in such situation the range data may be acquired at the timing where acquisition of the range data becomes possible and then outputted to the position calculating unit 4. Since it will be possible, even when the range data cannot be acquired at the same timing as image pickup by the image pickup unit 23, to acquire the range data soon afterwards, unless the image pickup apparatus 20 is moving at high speed, the error in the position calculation result will be small. Also, in cases where it is difficult to acquire the range data at the same time as image pickup due to hardware/software ressources of the image pickup apparatus 20 not being available, the demodulation unit 3 may acquire the range data following image pickup at timing when it becomes possible to acquire the range data and output such range data to the position calculating unit 4.

In the present embodiment, if data of an image that has been appended with orbital parameters has already been stored in the image data storage unit of the RAM 29, it is possible, when another image is to be appended with orbital parameters that are the same as the stored orbital parameters, to store the data of the other image in the image data storage unit of the RAM 29 without appending the orbital parameters. In such case, the position calculating unit 4 may calculate the position data corresponding to the range data appended to such other image by referring to the orbital parameters appended to the data of the image mentioned above that was already stored in the image data storage unit of the RAM 29. By doing so, it is possible to further reduce the data size of the data of images stored in the image data storage unit of the RAM 29.

Note that although only an example where the position data obtained by the GPS block 21 is used by a digital camera or the like has been described, it is possible to apply the above approaches in the same way and achieve the same effects in any other appliance or device that uses position data obtained by the GPS block 21, such as a mobile phone or portable computer. Similarly, the method of using the obtained position data is not limited to the generation of image pickup position information by a digital camera as described in the above embodiment, and such data can be used in other ways. Additionally, the present invention may be realized in the form of a transfer device including storage such as a CD-ROM, DVD, memory, hard disk drive, and the like that stores the type of program described above and a transmission device that reads the program from the storage and transmits the program directly or indirectly to an apparatus that executes the program.

Embodiments of the invention can also be implemented by supplying a storage medium storing program code of software for realizing the functions of the embodiment described above to a system or apparatus and causing a computer (or CPU, MPU, or the like) of such system or apparatus to read out and execute the program code stored on the storage medium.

In such cases, the program code itself read out from the storage medium realizes the functions of the embodiment described above, and hence both the program code and a storage medium that stores such program code would be aspects of the implementation.

As examples of the storage medium for supplying the program code, it is possible to use a floppy (registered trademark) disk, a hard-disk drive, a magneto-optical disc, an optical disc such as a CD-ROM, a CD-R, a CD-RW, a DVD-ROM, a DVD-RAM, a DVD-RW, or a DVD+RW, a magnetic tape, a non-volatile memory card, and a ROM. Alternatively, the program code may be downloaded via a network.

In addition, the functions of the above-described embodiment may be realized not only by executing a program code read out by a computer but also by causing an OS (operating system) or the like running on a computer to carry out some or all of the actual processing that realizes the functions of the above-described embodiment based on instructions included in the program code.

Also, the functions of the above-described embodiment may be realized by writing a program code read out from the storage medium into a memory provided on an expansion board inserted into a computer or in an expansion unit connected to the computer and then causing a CPU or the like provided in the expansion board or the expansion unit to perform a part or all of the actual processing that realizes the functions of the above-described embodiment based on instructions in the program code.

Although embodiments of the present invention have been described in detail with reference to the attached drawings, the present invention is not limited to the above examples. It should be understood by those skilled in the art that various modifications, combinations, sub-combinations and alterations may occur depending on design requirements and other factors insofar as they are within the scope of the appended claims or the equivalents thereof.

The present application contains subject matter related to disclosed in Japanese Priority Patent Application JP 2010-139650 filed in the Japan Patent Office on June 18, 2010, the entire content of which is hereby incorporated by reference.

**Claims**

1. An information processing apparatus, comprising:

   a receiver configured to receive a plurality of signals from a plurality of Global Positioning System (GPS) satellites, and to obtain range data from the plurality of signals;
   an image acquiring unit configured to acquire image data while the receiver is obtaining the range data; and
   an image processing unit configured to append the range data to the image data and store the image data appended with the range data in a memory.

2. The information processing apparatus of claim 1, wherein the receiver is configured to obtain the range data by counting chips in pseudo-random noise of each of the plurality of signals.

3. The information processing apparatus of claim 1, further comprising a position calculating unit configured to extract orbital parameters from each of the plurality of signals.

4. The information processing apparatus of claim 3, wherein the position calculating unit is configured to extract the orbital parameters after the image acquiring unit has acquired the image data.

5. The information processing apparatus of claim 3, wherein the position calculating unit is configured to output the orbital parameters to the image processing unit.

6. The information processing apparatus of claim 5, wherein the image processing unit is configured to append the orbital parameters to the image data appended with the range data in the memory.

7. The information processing apparatus of claim 6, wherein the position calculating unit is configured to acquire the range and the orbital parameters appended to the image data.

8. The information processing of claim 7, wherein the position calculating unit is configured to calculate a position based on the acquired range and the orbital parameters.

9. The information processing apparatus of claim 8, wherein the position calculating unit is configured to output the calculated position to the image processing unit.

10. The information processing apparatus of claim 9, wherein the image processing unit is configured to append the position information received from the position calculating unit to the image data in place of the range data and the orbital parameters, and store the image data appended with the position information in the memory.

11. An information processing method, comprising:

   receiving a plurality of signals from a plurality of Global Positioning System (GPS) satellites;
   obtaining range data from the plurality of signals;
   acquiring image data while obtaining the range data;

appending the range data to the image data; and
storing the image data appended with the range data in a memory.

12. The information processing method of claim 11, wherein obtaining the range data includes counting chips in pseudo-random noise of each of the plurality of signals.

13. The information processing method of claim 11, further comprising extracting orbital parameters from each of the plurality of signals after the image data has been acquired.

14. The information processing method of claim 13, further comprising appending the parameters to the image data with the range data in the memory.

15. A non-transitory computer-readable medium including computer program instructions, which, when executed by an information processing apparatus, cause the information processing apparatus to perform a method comprising:

receiving a plurality of signals from a plurality of Global Positioning System (GPS) satellites;
obtaining range data from the plurality of signals;
acquiring image data while obtaining the range data;
appending the range data to the image data; and
storing the image data appended with the range data in a memory.

# FIG.1

FIG.2

INTERMEDIATE FREQUENCY SIGNAL

DATA BITS

POSITION CALCULATING UNIT 4

RANGE DATA

Ch.4
Ch.3
Ch.2
Ch.1

SPECTRUM DESPREADER 10

DATA DEMODULATOR 11

3

INTERMEDIATE FREQUENCY CONVERTER 2

1

# FIG.3

LONG FRAME

| SUBFRAME 1 | SUBFRAME 2 | SUBFRAME 3 | SUBFRAME 4 | SUBFRAME 5 |

PREAMBLE

# FIG.4

IMAGE PICKUP BLOCK
22

GPS BLOCK
21

| | |
|---|---|
| SWITCH ON POWER — S102 | SWITCH ON POWER — S202 |
| | ASSIGN RECEIVED SATELLITE — S204 |
| | DEMODULATE DATA — S206 |

S104

IMAGE PICKUP OPERATION ←–– SIMULTANEOUS ––→ ACQUIRE RANGE DATA — S208

← RANGE DATA

S210

ACQUIRE TRACK PARAMETERS — S212

← TRACK PARAMETERS

S214

POSITION CALCULATION — S216

← POSITION DATA

S218

FIG.5

| GPS RECEPTION DATA | | 140kByte |
|---|---|---|
| INTERMEDIATE DATA | RANGE DATA | 100Byte |
| | TRACK PARAMETERS | 768Byte |
| POSITION DATA | | 24Byte |

# FIG.6

200 (GPS SATELLITE)

210 (GPS RECEIVER)

211 (ANTENNA UNIT)

| 212 | 213 | 214 |
|---|---|---|
| INTERMEDIATE FREQUENCY CONVERSION UNIT | SIGNAL SYNCHRONOUS DEMODULATING UNIT | POSITION CALCULATING UNIT |

EP 2 397 869 A1

# FIG.7

POWER SWITCHED ON

MEASUREMENT OF RANGE DATA

EP 2 397 869 A1

17

Europäisches
Patentamt

European
Patent Office

Office européen
des brevets

## EUROPEAN SEARCH REPORT

**Application Number**

EP 11 16 9493

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/218401 A1 (LOOMIS PETER VAN WYCK [US] ET AL) 11 September 2008 (2008-09-11)<br>* figures 1-3 *<br>* paragraph [0031] - paragraph [0033] *<br>* paragraph [0039] - paragraph [0040] *<br>* paragraph [0044] *<br>* paragraph [0071] * | 1-15 | INV.<br>G01S19/14<br>G01S19/35 |
| X | US 2006/208943 A1 (GRONEMEYER STEVEN A [US]) 21 September 2006 (2006-09-21)<br>* figure 3 *<br>* paragraph [0023] - paragraph [0025] *<br>* paragraph [0042] * | 1,2,11, 12,15 | |
| A | US 2002/044690 A1 (BURGESS KEN L [US]) 18 April 2002 (2002-04-18)<br>* figures 2,4 *<br>* paragraph [0031] * | 1-15 | |
| A | EP 1 881 341 A2 (SEIKO EPSON CORP [JP]) 23 January 2008 (2008-01-23)<br>* paragraph [0098] - paragraph [0103] * | 1-15 | **TECHNICAL FIELDS SEARCHED (IPC)**<br><br>G01S |
| A | US 6 016 119 A (KRASNER NORMAN F [US]) 18 January 2000 (2000-01-18)<br>* column 7, line 53 - column 8, line 4 *<br>* column 9, line 43 - line 58 *<br>* column 10, line 18 - line 30 * | 1-15 | |

The present search report has been drawn up for all claims

| Place of search | Date of completion of the search | Examiner |
|---|---|---|
| Munich | 17 November 2011 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 16 9493

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2011

| Patent document cited in search report | Publication date | Patent family member(s) | Publication date |
|---|---|---|---|
| US 2008218401 A1 | 11-09-2008 | NONE | |
| US 2006208943 A1 | 21-09-2006 | CN 101147081 A<br>EP 1842078 A1<br>JP 2008533499 A<br>KR 20070114150 A<br>US 2006208943 A1<br>WO 2006102033 A1 | 19-03-2008<br>10-10-2007<br>21-08-2008<br>29-11-2007<br>21-09-2006<br>28-09-2006 |
| US 2002044690 A1 | 18-04-2002 | NONE | |
| EP 1881341 A2 | 23-01-2008 | EP 1881341 A2<br>KR 20080009012 A<br>US 2008018528 A1 | 23-01-2008<br>24-01-2008<br>24-01-2008 |
| US 6016119 A | 18-01-2000 | AU 7396596 A<br>US 6016119 A<br>WO 9714055 A1 | 30-04-1997<br>18-01-2000<br>17-04-1997 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4292682 B
- JP H04237228 B
- JP 2010139650 A